# EUROPÄISCHE PATENTANMELDUNG

(11) **EP 4 491 751 A2**
(43) Veröffentlichungstag der Anmeldung: **15.01.2025**
(21) Anmeldenummer: 24176356.4
(22) Anmeldetag: 16.05.2024
(51) Int. Cl.: C22B 26/12, C22B 3/24, C22B 3/42

(54) **ANLAGE UND VERFAHREN ZUR GEWINNUNG VON LITHIUM AUS LITHIUM-HALTIGEN FLUIDEN UNTER VERWENDUNG EINES ERSTEN SORBENS UND EINES ZWEITEN SORBENS**

(30) Priorität: 07.07.2023 DE 102023118084
(71) Anmelder: EnBW Energie Baden-Württemberg AG, 76131 Karlsruhe (DE)
(72) Erfinder: Herrmann, Laura, 76227 Karlsruhe (DE); Kölbel, Thomas, 76228 Karlsruhe (DE); Kaymakci, Elif, 76337 Waldbronn (DE); Graczyk-Zajac, Magdalena, 69126 Heidelberg (DE)
(74) Vertreter: DREISS Patentanwälte PartG mbB

(57) **Zusammenfassung**

Die Erfindung betrifft eine Anlage (10) zur Gewinnung von Lithium aus Lithium-haltigen Fluiden. Es ist vorgesehen, dass die Anlage (10) einen ersten Behälter (12) umfasst, der ein erstes Sorbens (14) enthält, das dazu ausgebildet ist, Lithiumionen durch Adsorption zu binden, dass die Anlage (10) einen zweiten Behälter (16) umfasst, der ein zweites Sorbens (18) enthält, das dazu ausgebildet ist, Lithiumionen durch Austausch von Wasserstoffionen gegen Lithiumionen zu binden, und dass ein Fluidauslass des ersten Behälters (12) mit einem Fluideinlass des zweiten Behälters (16) fluidisch verbunden ist.

## Beschreibung

Die vorliegende Erfindung betrifft eine Anlage zur Gewinnung von Lithium aus Lithium-haltigen Fluiden. Außerdem betrifft die vorliegende Erfindung ein Verfahren zur Gewinnung von Lithium aus Lithium-haltigen Fluiden.

Aufgrund ihrer Vorzüge wie beispielsweise einer hohen elektrischen Energiedichte, einer hohen elektrischen Arbeitsspannung, einer langen zyklischen Lebensdauer, dem fehlenden Memory-Effekt usw. ist die wiederaufladbare Lithium-Ionen-Batterie bzw. der Lithiumionen-Akkumulator in Geräten wie Laptops, Mobiltelefonen und Elektroautos weit verbreitet. Die Nachfrage nach Lithium steigt unter anderem aufgrund des Ausbaus der Elektromobilität stark an.

Es ist bekannt, Lithium aus Lithium-haltigen Fluiden durch Sorptionsprozesse und/oder Ionenaustauschprozesse zu gewinnen. Hierzu wird das Lithium-haltige Fluid durch ein Sorbens geleitet, welches in dem Fluid enthaltene Lithiumionen bindet. In einem anschließenden Desorptionsvorgang werden die gebundenen Lithiumionen von dem Sorbens desorbiert. Zum einen sind solche Sorbenzien bekannt, die Lithiumionen durch Adsorption (erste Art von Sorbenzien). Ein Beispiel für ein solches Sorbens ist ein Aluminium Layered Double Hydroxide (Al-LDH). Derartige Sorbenzien der ersten Art sind typischerweise chemisch und mechanisch stabil, haben jedoch den Nachteil, dass ihre selektive Adsorptionsfähigkeit gegenüber Lithiumionen eingeschränkt ist. Das bedeutet, dass derartige Sorbenzien zusätzlich zu Lithiumsalzen typischerweise auch Fremdsalze wie beispielsweise Natriumchlorid adsorbieren. Die selektive Adsorption von Lithiumsalzen unter Verwendung solcher Sorbenzien in Anwesenheit anderer Fremdsalze wie bspw. Natriumsalze ist daher nur eingeschränkt möglich.

Zudem sind auch solche Sorbenzien bekannt, die Lithiumionen durch Austausch von gebundenen Wasserstoffionen bzw. Protonen gegen Lithiumionen binden (zweite Art von Sorbenzien). Beispiele für solche Sorbenzien sind Lithiumtitanoxid oder Lithiummanganoxid). Derartige Sorbenzien haben eine hohe Selektivität für Lithiumionen.

Allerdings sind sie im Vergleich zu bspw. einem Aluminium Layered Double Hydroxide chemisch und auch mechanisch weniger stabil. Entsprechend kann es bei dem Desorptionsschritt der Lithiumextraktion auf Basis eines Ionenaustauschverfahrens dazu kommen, dass ein Teil des Sorbens abgebaut wird und verloren geht.

In bekannten Anlagen und Verfahren wird zur Gewinnung von Lithium typischerweise entweder ein Sorbens der einen Art oder ein Sorbens der anderen Art verwendet. Eine solche Anlage und ein solches Verfahren sind beispielsweise in der Offenlegungsschrift EP 4 063 527 A1 beschrieben. Dies geht jedoch mit den zuvor im Zusammenhang mit den beiden Arten von Sorbenzien thematisierten Nachteilen einher.

Die Erfindung beschäftigt sich mit der Aufgabe, eine Anlage und ein Verfahren zur Gewinnung von Lithium aus Lithium-haltigen Fluiden bereitzustellen, bei der/dem die vorstehend erörterten Nachteile der beiden Arten von Sorbenzien wenigstens weitestgehend überwunden werden. Hierzu werden hier eine kaskadengeschaltete Anlage und ein entsprechendes Verfahren vorgeschlagen.

Diese Aufgabe wird erfindungsgemäß durch eine Anlage mit den Merkmalen des Anspruchs 1 und durch ein Verfahren mit den Merkmalen des Anspruchs 8 gelöst. Die jeweiligen Unteransprüche und die Beschreibung geben vorteilhafte Varianten und Ausführungsformen an.

Erfindungsgemäß ist also eine Anlage zur Gewinnung von Lithium aus Lithium-haltigen Fluiden vorgesehen. Die Anlage umfasst einen ersten Behälter, der ein erstes Sorbens enthält, das dazu ausgebildet ist, Lithiumionen durch Adsorption zu binden. Bei einem Adsorptionsvorgang reichert sich das adsorbierte Material an einer Grenzfläche des Sorbens an und/oder wird in eine Schichtstruktur des Sorbens eingelagert. Das in dem ersten Behälter enthaltene erste Sorbens ist dazu ausgebildet, Lithiumionen durch Adsorption zu binden. Die Adsorption bildet also den zumindest vorwiegenden Mechanismus im Hinblick auf die Bindung von Lithium bzw. Lithiumionen durch das erste Sorbens. Vorzugsweise ist der erste Behälter als Kolonne ausgebildet. Eine Kolonne ist ein säulenförmiger Behälter. Vorzugsweise adsorbiert das erste Sorbens die Lithiumionen als Lithiumsalz, also gemeinsam mit zugehörigen Anionen. Je nach Lithium-haltigem Fluid können dies jeweils unterschiedliche Anionen sein, bspw. Chloridionen oder Sulphationen. Entsprechend wird dann Lithiumchlorid oder Lithiumsulphat adsorbiert.

Die erfindungsgemäße Anlage umfasst außerdem einen zweiten Behälter, der ein zweites Sorbens enthält, das dazu ausgebildet ist, Lithiumionen durch Austausch von gebundenen Wasserstoffionen gegen Lithiumionen zu binden. Das zweite Sorbens weist also zunächst Wasserstoffionen auf und ist dazu ausgebildet, die gebundenen Wasserstoffionen gegen Lithiumionen auszutauschen, sodass das zweite Sorbens als Kationenaustauscher wirkt. Der Austausch von gebundenen Wasserstoffionen gegen Lithiumionen bildet den zumindest vorwiegenden Mechanismus im Hinblick auf die Bindung von Lithium bzw. Lithiumionen durch das zweite Sorbens. Vorzugsweise ist der zweite Behälter als Kolonne ausgebildet.

Erfindungsgemäß ist vorgesehen, dass ein Fluidauslass des ersten Behälters mit einem Fluideinlass des zweiten Behälters fluidisch verbunden ist. Aus dem ersten Behälter ausströmendes Fluid kann entsprechend dem zweiten Behälter zugeführt werden.

Die erfindungsgemäße Anlage ermöglicht eine vorteilhafte Gewinnung von Lithium aus Lithium-haltigen Fluiden, wobei die Nachteile der eingesetzten Sorbenzien zumindest weitestgehend überwunden werden. Hierzu kann ein Lithium-haltiges Rohfluid zunächst dem ersten Behälter mit dem darin befindlichen ersten Sorbens zugeführt werden. Das erste Sorbens bindet Lithiumionen dann durch Adsorption von in dem Rohfluid enthaltenen Lithiumionen. Zusätzlich werden auch bestimmte Fremdsalze wie beispielsweise Natriumchlorid durch das erste Sorbens adsorbiert. Es werden jedoch nicht sämtliche Bestandteile des Rohfluids durch das erste Sorbens adsorbiert, sodass durch das erste Sorbens eine Grobreinigung erzielt werden kann. Die meisten Bestandteile des Rohfluids verbleiben im Rohfluid und werden zusammen mit dem Rohfluid aus dem ersten Behälter abgeführt. Anschließend kann ein Desorptionsfluid dem ersten Behälter zugeführt werden, um die adsorbierten Lithiumionen zu desorbieren. Typischerweise werden dabei auch die adsorbierten Fremdsalze desorbiert. Sodann kann das dann mit Lithiumionen angereicherte Desorptionsfluid dem zweiten Behälter bzw. dem darin befindlichen zweiten Sorbens zugeführt werden. Aufgrund der fluidischen Verbindung des Fluidauslasses des ersten Behälters mit dem Fluideinlass des zweiten Behälters ist dies leicht möglich. Am Ende des ersten Prozesses (Adsorption durch das erste Sorbens und anschließende Desorption) wird eine reinere Lösung mit einem höheren Lithiumgehalt im Vergleich zum Rohfluid gewonnen, was es dem zweiten Prozess (Aufnahme von Lithiumionen durch das zweite Sorbens und anschließende Desorption) ermöglicht, eine effizientere Extraktion durchzuführen. Zusätzlich ermöglich die Implementierung der Grobreinigung den Schutz des chemisch und mechanisch instabilen zweiten Sorbens vor Druck- und Temperaturschwankungen, da der zweite Behälter vom Rohfluid entkoppelt werden kann. Das zweite Sorbens weist eine deutlich höhere Selektivität im Hinblick auf die Bindung von Lithiumionen auf, sodass in dem zweiten Behälter eine Feinreinigung realisiert werden kann. Weil zuvor bereits die Grobreinigung stattgefunden hat und eine reinere Lösung in den zweiten Behälter geleitet wird, wird das zweite Sorbens geschont. Die im Rahmen der Grobreinigung von dem Lithium getrennten Bestandteile des Rohfluids gelangen nicht mit dem zweiten Sorbens in Kontakt.

In einigen bevorzugten Ausführungsformen ist vorgesehen, dass das erste Sorbens ein Aluminiumoxid-basiertes Sorbens ist. Aluminiumoxid-basierte Sorbenzien sind chemisch und mechanisch besonders stabil. Dies ermöglicht es beispielsweise, das Rohfluid unter Einsatz von Überdruck durch den ersten Behälter hindurch zu leiten, wodurch die Effizienz im Hinblick auf die Gewinnung von Lithium gesteigert werden kann. Besonders bevorzugt ist das Aluminiumoxid-basierte erste Sorbens ein Layered Double Hydroxide (LDH) mit der chemischen Summenformel LiₓAl₂(OH)₆Clₓ·n H₂O, bspw. LiCl·Al₂(OH)₆·n H₂O.

In einigen bevorzugten Ausführungsformen ist vorgesehen, dass das zweite Sorbens ein Manganoxid-basiertes Sorbens oder ein Titanoxid-basiertes Sorbens ist. Derartige Sorbenzien weisen eine hohe Selektivität im Hinblick auf die Bindung von Lithiumionen auf. Besonders bevorzugt ist das Manganoxid-basierte Sorbens ein Sorbens mit der chemischen Summenformel HₓMn_{y}O_{z}, bspw. H_{1.6}Mn_{1.6}O₄. Besonders bevorzugt ist das Titanoxid-basierte Sorbens ein Sorbens mit der chemischen Summenformel HₓTi_{y}O_{z}, bspw. H₂TiO₃.

In einigen bevorzugten Ausführungsformen ist vorgesehen, dass der Fluidauslass des ersten Behälters oder ein weiterer Fluidauslass des ersten Behälters mit einer Injektionsbohrung fluidisch verbunden ist, sodass ein aus dem ersten Behälter ausströmendes Fluid wahlweise dem zweiten Behälter oder der Injektionsbohrung zuführbar ist. Durch die fluidische Verbindung mit der Injektionsbohrung kann das Rohfluid nach Durchlaufen des ersten Behälters der Injektionsbohrung leicht zugeführt werden. Weil das Rohfluid durch den stattfindenden Adsorptionsvorgang unter Verwendung des ersten Sorbens nicht angesäuert wird, ist eine pH-Regulierung typischerweise nicht notwendig.

In einigen bevorzugten Ausführungsformen ist vorgesehen, dass ein Fluidauslass des zweiten Behälters mit einem Fluideinlass des ersten Behälters fluidisch verbunden ist. Daraus ergibt sich der Vorteil, dass aus dem zweiten Behälter ausströmendes Fluid dem ersten Behälter zugeführt werden kann, beispielsweise um das Fluid für einen Desorptionsvorgang in dem ersten Behälter zu nutzen.

In einigen bevorzugten Ausführungsformen ist vorgesehen, dass der Fluidauslass des zweiten Behälters durch eine Entsalzungseinheit mit dem Fluideinlass des ersten Behälters fluidisch verbunden ist. Für Desorptionsvorgänge in dem ersten Behälter sind Fluide bevorzugt, die einen geringen Salzgehalt aufweisen. Die Entsalzungseinheit hat insofern den Vorteil, dass die Eignung des aus dem zweiten Behälter ausströmenden Fluids für Desorptionsvorgänge verbessert wird.

In einigen bevorzugten Ausführungsformen ist vorgesehen, dass die Entsalzungseinheit wenigstens eine Osmosemembran aufweist, und/oder dass die Entsalzungseinheit wenigstens ein Sorbens aufweist. Durch eine Osmosemembran bzw. durch ein Sorbens kann der Salzgehalt von Fluiden durch die Entsalzungseinheit wirksam verringert werden.

Das erfindungsgemäße Verfahren zur Gewinnung von Lithium aus Lithium-haltigen Fluiden umfasst wenigstens folgendes:
Hindurchleiten eines Lithium-haltigen Rohfluids durch ein erstes Sorbens, wobei das erste Sorbens Lithiumionen durch Adsorption bindet, sodass ein mit Lithiumionen angereichertes erstes Sorbens erhalten wird. Die Adsorption bildet den zumindest vorwiegenden Mechanismus im Hinblick auf die Bindung von Lithiumionen durch das erste Sorbens. Vorzugsweise wird als erstes Sorbens ein Aluminiumoxid-basiertes Sorbens verwendet. Weil das erste Sorbens Lithiumionen durch Adsorption bindet, wird der pH-Wert des Rohfluids beim Durchlaufen des ersten Sorbens allenfalls geringfügig verändert. Vorzugsweise wird das Rohfluid nach Durchlaufen des ersten Sorbens einer Injektionsbohrung zugeführt, wobei auf eine vorherige pH-Regulierung des Rohfluids vorzugsweise verzichtet wird. Als Lithium-haltiges Rohfluid kann beispielsweise eine Lithium-haltige Sole oder eine Lithium-haltige Batterie-Recycling-Lösung verwendet werden.

Hindurchleiten eines Desorptionsfluids durch das mit Lithiumionen angereicherte erste Sorbens, wobei adsorbierte Lithiumionen desorbiert werden, sodass ein mit Lithiumionen angereichertes Desorptionsfluid erhalten wird. Vorzugsweise wird als Desorptionsfluid salzarmes Wasser verwendet, insbesondere destilliertes Wasser. Salzarmes Wasser hat eine hohe Effektivität im Hinblick auf die Desorption von adsorbierten Lithiumionen. Es kann als Desorptionsfluid auch eine niedrigkonzentrierte Lithiumchlorid-Lösung verwendet werden. Dies hat den Vorteil, dass die Stabilität des Materials erhöht wird.

Hindurchleiten des mit Lithiumionen angereicherten Desorptionsfluids durch ein zweites Sorbens, wobei das zweite Sorbens Lithiumionen durch Austausch von Lithiumionen gegen Wasserstoffionen bindet, sodass ein mit Lithiumionen angereichertes zweites Sorbens und ein Lithiumionen-armes Desorptionsfluid erhalten werden. Die Bindung von Lithiumionen durch Austausch von gebundenen Wasserstoffionen gegen Lithiumionen bildet den zumindest vorwiegenden Mechanismus im Hinblick auf die Bindung von Lithiumionen durch das zweite Sorbens. Vorzugsweise wird als zweites Sorbens ein Manganoxid-basiertes Sorbens oder ein Titanoxid-basiertes Sorbens verwendet. Derartige Sorbenzien zeichnen sich durch ihre hohe Selektivität im Hinblick auf die Bindung von Lithiumionen gegenüber der Bindung von beispielsweise Natriumionen aus.

Hindurchleiten eines säurehaltigen Elutionsfluids durch das mit Lithiumionen angereicherte zweite Sorbens, wobei gebundene Lithiumionen durch Austausch gegen Wasserstoffionen desorbiert werden, sodass ein mit Lithiumionen angereichertes Elutionsfluid erhalten wird. Dieser Austauschprozess wird durch die hohe Konzentration von Wasserstoffionen bzw. Protonen in dem säurehaltigen Elutionsfluid gefördert.

Das erfindungsgemäße Verfahren ermöglicht eine vorteilhafte Gewinnung von Lithium aus Lithium-haltigen Fluiden. Durch das erste Sorbens wird eine Grobreinigung realisiert, bei der Lithiumsalze und bestimmte Fremdsalze wie beispielsweise Natriumchlorid durch Adsorption von sonstigen Bestandteilen des Rohfluids getrennt werden. Das erste Sorbens ist hierzu aufgrund seiner chemischen und mechanischen Stabilität gut geeignet. Durch das zweite Sorbens wird anschließend eine Feinreinigung realisiert, bei welcher Lithium aufgrund der hohen Selektivität des zweiten Sorbens auch von den Fremdsalzen wie beispielsweise Natriumchlorid getrennt wird.

Wie zuvor erwähnt, ist es vorteilhaft, wenn als Desorptionsfluid eine niedrigkonzentrierte Lithiumchlorid-Lösung verwendet wird. Besonders bevorzugt wird als Desorptionsfluid ein Gemisch verwendet, das salzarmes Wasser, insbesondere destilliertes Wasser, aufweist und zusätzlich dazu mit Lithiumionen angereichertes Desorptionsfluid, also das im Verfahrensschritt b. erhaltene Fluid, und/oder mit Lithiumionen angereichertes Elutionsfluid, also das in dem Verfahrensschritt d. erhaltene Fluid. Mit Lithiumionen angereichertes Desorptionsfluid und/oder mit Lithiumionen angereichertes Elutionsfluid werden also in einem späteren Desorptionsvorgang als Bestandteil des Desorptionsfluids verwendet.

Vorzugsweise wird das Verfahren mittels einer wie zuvor beschriebenen Anlage zur Gewinnung von Lithium aus Lithium-haltigen Fluiden durchgeführt.

Vorteile und Weiterbildungsmöglichkeiten der Anlage sind als ebenso in Bezug auf das Verfahren beschrieben zu verstehen und umgekehrt sind Vorteile und Weiterbildungsmöglichkeiten des Verfahrens als ebenso in Bezug auf die Anlage beschrieben zu verstehen.

In einigen bevorzugten Ausführungsformen des Verfahrens ist vorgesehen, dass das Lithium-haltige Rohfluid unter einem Druck von zumindest 2 bar durch das erste Sorbens hindurchgeleitet wird. Hierdurch kann die Effizienz des Verfahrens gesteigert werden. Das chemisch und mechanisch stabile erste Sorbens wird durch den Überdruck allenfalls geringfügig beschädigt. Vorzugsweise wird das Rohfluid unter einem Druck von zumindest 2 bar und höchstens 50 bar durch das erste Sorbens hindurchgeleitet, vorzugsweise unter einem Druck von zumindest 5 bar, vorzugsweise unter einem Druck von zumindest 5 bar und höchstens 50 bar, besonders bevorzugt unter einem Druck von zumindest 10 bar und höchstens 30 bar.

In einigen bevorzugten Ausführungsformen des Verfahrens ist vorgesehen, dass das mit Lithiumionen angereicherte Desorptionsfluid unter Atmosphärendruck durch das zweite Sorbens hindurchgeleitet wird. Wie zuvor erwähnt ist das zweite Sorbens typischerweise mechanisch weniger stabil, sodass durch das Hindurchleiten unter Atmosphärendruck das zweite Sorbens geschont wird. Weil zuvor die Grobreinigung durch das erste Sorbens bereits stattgefunden hat, weist das mit Lithiumionen angereicherte Desorptionsfluid typischerweise eine höhere Lithiumionen-Konzentration auf als das Rohfluid, sodass trotz Verwendung von Atmosphärendruck und der damit einhergehenden geringeren Strömungsgeschwindigkeit dennoch eine zeiteffiziente Gewinnung von Lithium realisiert werden kann.

In einigen bevorzugten Ausführungsformen des Verfahrens ist vorgesehen, dass das säurehaltige Elutionsfluid Salzsäure, Schwefelsäure und/oder Essigsäure aufweist. Es hat sich gezeigt, dass diese Säuren für die Verdrängung von Lithiumionen aus dem zweiten Sorbens besonders geeignet sind.

In einigen bevorzugten Ausführungsformen des Verfahrens beträgt die Konzentration an Säure in dem säurehaltigen Elutionsfluids zwischen 0,01 mol/l und 5 mol/l. Es ist damit die Konzentration des säurehaltigen Elutionsfluids vor Hindurchleiten durch das zweite Sorbens gemeint. Es hat sich gezeigt, dass dieser Konzentrationsbereich eine zeiteffiziente Verdrängung von Lithiumionen aus dem zweiten Sorbens ermöglicht. Zugleich findet allenfalls eine geringfügige Beschädigung des zweiten Sorbens statt.

In einigen bevorzugten Ausführungsformen des Verfahrens ist vorgesehen, dass das durch das zweite Sorbens hindurchgeleitete, dann Lithiumionen-arme Desorptionsfluid als Desorptionsfluid wiederverwendet wird. Durch die Wiederverwendung des Desorptionsfluids kann der Gesamtbedarf an Desorptionsfluid verringert werden. Vorzugsweise wird der Salzgehalt des durch das zweite Sorbens hindurchgeleiteten, dann Lithiumionen-armen Desorptionsfluids vor dessen Wiederverwendung verringert. Beispielsweise wird das durch das zweite Sorbens hindurchgeleitete, dann Lithiumionen-arme Desorptionsfluid hierzu durch eine Osmosemembran und/oder durch ein weiteres Sorbens hindurchgeleitet.

In einigen bevorzugten Ausführungsformen des Verfahrens ist vorgesehen, dass das säurehaltige Elutionsfluid mehrfach durch das zweite Sorbens hindurchgeleitet wird. Das säurehaltige Elutionsfluid wird also in mehreren aufeinanderfolgenden Desorptionsvorgängen verwendet, wobei zwischen zwei aufeinanderfolgenden Desorptionsvorgängen vorzugsweise erneut mit Lithiumionen angereichertes Desorptionsfluid durch das zweite Sorbens hindurchgeleitet wird, um das zweite Sorbens mit Lithiumionen zu beladen. Durch die mehrfache Verwendung des säurehaltigen Elutionsfluids kann die Lithiumionenkonzentration in dem säurehaltigen Elutionsfluid gesteigert werden. Zudem wird insgesamt nur eine geringe Menge von säurehaltigem Elutionsfluid benötigt. Falls notwendig, kann der pH-Wert des säurehaltigen Elutionsfluids zwischen aufeinanderfolgenden Desorptionsvorgängen durch Zugabe von Säure eingestellt werden.

Die Erfindung wird im Folgenden anhand der Figuren näher beschrieben, wobei gleiche oder funktional gleiche Elemente gegebenenfalls lediglich einmal mit Bezugszeichen versehen sind. Die Beschreibung dient als Beispiel und ist nicht einschränkend zu verstehen. Es zeigen
- Figur 1: eine schematische Darstellung einer Anlage zur Gewinnung von Lithium aus Lithiumhaltigen Fluiden; und
- Figur 2: ein Verfahren zur Gewinnung von Lithium aus Lithium-haltigen Fluiden.

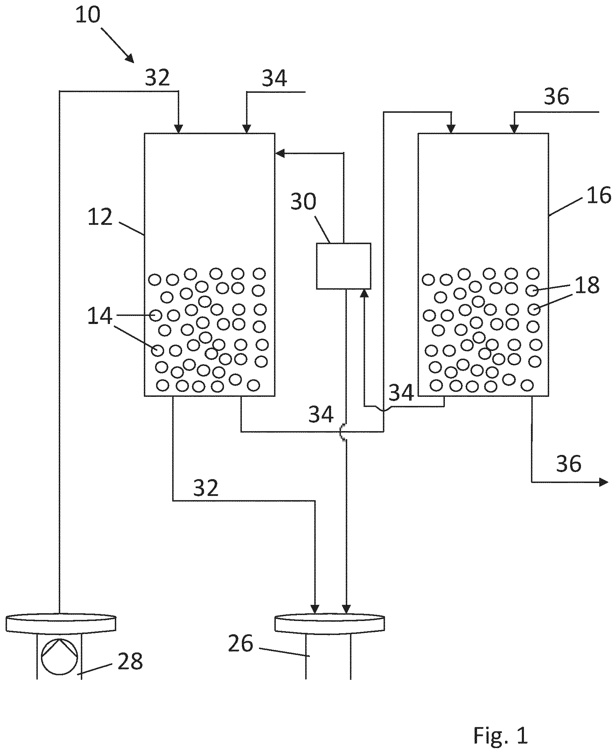

Figur 1 zeigt eine Anlage 10 zur Gewinnung von Lithium aus Lithium-haltigen Fluiden in einer schematischen Darstellung. Insbesondere sind Fluidauslässe, Fluideinlässe und Fluidleitungen in Figur 1 nicht detailliert dargestellt, sondern nur schematisch angedeutet. In dem vorliegenden Beispiel enthält das Fluid Lithium in Form von Lithiumchlorid. Je nach Zusammensetzung des Fluids können jedoch auch andere Arten von Lithiumsalzen gewonnen werden.

Die Anlage 10 umfasst einen ersten Behälter 12, der ein erstes Sorbens 14 enthält. Das erste Sorbens 14 liegt als Feststoff vor. Der erste Behälter 12 ist als Kolonne ausgebildet. Bei dem in Figur 1 dargestellten Ausführungsbeispiel ist das Innere des ersten Behälters 12 nur teilweise mit dem ersten Sorbens 14 befüllt. Das erste Sorbens 14 ist dazu ausgebildet, Lithiumionen durch Adsorption zu binden. Vorzugsweise ist das erste Sorbens 14 ein Aluminiumoxid-basiertes Sorbens.

Die Anlage 10 umfasst außerdem einen zweiten Behälter 16, der ein zweites Sorbens 18 enthält. Auch das zweite Sorbens 18 liegt als Feststoff vor. Der zweite Behälter 16 ist als Kolonne ausgebildet. Bei dem in Figur 1 dargestellten Ausführungsbeispiel ist das Innere des zweiten Behälters 16 nur teilweise mit dem zweiten Sorbens 18 befüllt. Das zweite Sorbens 18 ist dazu ausgebildet, Lithiumionen durch Austausch von gebundenen Wasserstoffionen gegen Lithiumionen zu binden. Das zweite Sorbens 18 wirkt also im Hinblick auf die Bindung von Lithiumionen als Kationenaustauscher. Vorzugsweise ist das zweite Sorbens 18 ein Manganoxid-basiertes Sorbens oder ein Titanoxid-basiertes Sorbens.

Der erste Behälter 12 ist auslassseitig mit einem Fluideinlass des zweiten Behälters 16 fluidisch verbunden. Der erste Behälter 12 ist auslassseitig außerdem mit einer Injektionsbohrung 26 fluidisch verbunden ist. Entsprechend kann aus dem ersten Behälter 12 ausströmendes Fluid wahlweise dem zweiten Behälter 16 oder der Injektionsbohrung 26 zugeführt werden.

Der zweite Behälter 16 ist auslassseitig mit einem Fluideinlass des ersten Behälters 12 fluidisch verbunden. Aus dem zweiten Behälter 16 ausströmendes Fluid kann entsprechend dem ersten Behälter 12 zugeführt werden. Vorliegend ist der zweite Behälter 16 durch eine Entsalzungseinheit 30 mit dem Fluideinlass des ersten Behälters 12 fluidisch verbunden.

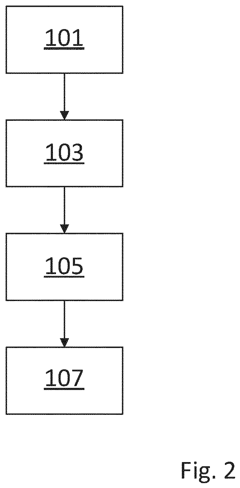

Im Folgenden wird mit zusätzlichem Bezug auf Figur 2 ein vorteilhaftes Verfahren zur Gewinnung von Lithium aus Lithium-haltigen Fluiden näher erläutert. Figur 2 zeigt das Verfahren anhand eines Flussdiagramms. Das Verfahren wird mittels der in Figur 1 gezeigten Anlage 10 durchgeführt.

In einem ersten Schritt 101 wird ein Lithium-haltiges Rohfluid 32 durch das erste Sorbens 14 hindurchgeleitet.

Das Hindurchleiten eines Fluids durch ein Sorbens beinhaltet das Einleiten des Fluids in den betreffenden Behälter und das anschließende Ausströmen aus dem Behälter. Vorliegend wird als Rohfluid 32 Thermalwasser verwendet, welches einer Produktionsbohrung 28 entnommen wurde. In dem Rohfluid 32 enthaltene Lithiumionen werden bei Durchlaufen des ersten Sorbens 14 durch das erste Sorbens 14 adsorbiert. Entsprechend werden ein mit Lithiumionen angereichertes erstes Sorbens 14 und ein Lithiumionen-armes Rohfluid 32 erhalten. Das Lithiumionen-arme Rohfluid 32 wird der Injektionsbohrung 26 zugeführt.

Vorzugsweise wird das Lithium-haltige Rohfluid 32 unter einem Druck durch das erste Sorbens 14 hindurchgeleitet, der den Atmosphärendruck übersteigt, besonders bevorzugt unter einem Druck von zumindest 10 Bar und höchstens 30 Bar.

In einem zweiten Schritt 103 wird ein Desorptionsfluid 34 durch das mit Lithiumionen angereicherte erste Sorbens 14 hindurchgeleitet. Vorzugsweise wird als Desorptionsfluid 34 salzarmes Wasser verwendet. Das Desorptionsfluid 34 desorbiert beim Durchlaufen des ersten Sorbens 14 an das erste Sorbens 14 adsorbierte Lithiumionen. Entsprechend wird das erste Sorbens 14 regeneriert und es wird ein mit Lithiumionen angereichertes Desorptionsfluid 34 erhalten.

Durch die Verfahrensschritte 101 und 103 wird eine Grobreinigung realisiert. Insbesondere werden die in dem Rohfluid 32 enthaltenen Lithiumionen von Bestandteilen des Rohfluids 32 getrennt, die das zweite Sorbens 18 beschädigen könnten. Im Rahmen der Grobreinigung wird das Lithium jedoch nicht von Fremdsalzen wie beispielsweise Natriumchlorid getrennt, die gleichermaßen durch das erste Sorbens 14 adsorbiert werden.

In einem dritten Verfahrensschritt 105 wird das mit Lithiumionen angereicherte Desorptionsfluid 34 durch das zweite Sorbens 18 hindurchgeleitet. Aufgrund der fluidischen Verbindung des ersten Behälters 12 mit dem zweiten Behälter 16 kann das Desorptionsfluid 34 dem zweiten Behälter 16 leicht zugeführt werden. Das zweite Sorbens 18 bindet in dem Desorptionsfluid 34 enthaltene Lithiumionen durch Austausch von gebundenen Wasserstoffionen gegen Lithiumionen. Entsprechend wird ein mit Lithiumionen angereichertes zweites Sorbens 18 erhalten. Aus dem zweiten Behälter 16 strömt ein Lithiumionen-armes Desorptionsfluid 34 aus.

In einem vierten Verfahrensschritt 107 wird ein säurehaltiges Elutionsfluid 36 durch das mit Lithiumionen angereicherte zweite Sorbens 18 hindurchgeleitet. Dabei werden an das zweite Sorbens 18 gebundene Lithiumionen durch in dem Elutionsfluid 36 enthaltene Wasserstoffionen ausgetauscht. Entsprechend wird das zweite Sorbens 18 regeneriert und es wird ein mit Lithiumionen angereichertes Elutionsfluid 36 erhalten.

Vorzugsweise umfasst das säurehaltige Elutionsfluid 36 als Säure Salzsäure, Schwefelsäure und/oder Essigsäure. Die Konzentration an Säure in dem säurehaltigen Elutionsfluid 36 beträgt vorzugsweise zumindest vor Hindurchleiten des Elutionsfluids 36 durch das zweite Sorbens 18 zwischen 0,01 mol/l und 5 mol/l.

Durch die Verfahrensschritte 105 und 107 wird eine Feinreinigung realisiert. Konkret werden Lithiumionen durch die Verfahrensschritte 105 und 107 auch von Fremdsalzen wie beispielsweise Natriumchlorid getrennt, die gleichfalls durch das erste Sorbens 14 adsorbiert werden. Dies ergibt sich aus der hohen Selektivität des zweiten Sorbens 18 für Lithiumionen.

Bei der in Figur 1 dargestellten Anlage 10 bzw. dem in Figur 2 dargestellten Verfahren wird das aus dem zweiten Behälter 16 ausströmende Desorptionsfluid 34 erneut dem ersten Behälter 12 zugeführt und insofern wiederverwendet. Dies hat den Vorteil, dass die Menge an insgesamt benötigtem Desorptionsfluid 34 verringert werden kann. Wie zuvor erwähnt, ist die Verwendung eines salzarmen Desorptionsfluids für die Desorption von Lithiumionen bevorzugt. Um den Salzgehalt des aus dem zweiten Behälter 18 ausströmenden Desorptionsfluids 34 zu verringern, wird das Desorptionsfluid 34 vor Wiederverwendung zunächst der Entsalzungseinheit 30 zugeführt. Durch die Entsalzungseinheit 30 wird der Salzgehalt des Desorptionsfluids 34 verringert. Hierzu umfasst die Entsalzungseinheit 30 beispielsweise zumindest eine Osmosemembran und/oder zumindest ein Sorbens. Eine zusätzlich anfallende Fraktion des Desorptionsfluids 34 mit hoher Salzkonzentration kann der Injektionsbohrung 26 zugeführt werden.

Vorzugsweise wird das säurehaltige Elutionsfluid 36 mehrfach durch das zweite Sorbens 18 hindurchgeleitet. Es werden also mehrere Desorptionsvorgänge mit demselben Elutionsfluid 36 durchgeführt. Zwischen aufeinanderfolgenden Desorptionsvorgängen wird das zweite Sorbens 18 durch Hindurchleiten von mit Lithiumionen angereichertem Desorptionsfluid 34 erneut mit Lithiumionen beladen. Durch die mehrfache Verwendung des Elutionsfluids 36 wird die Aufnahmekapazität des Elutionsfluids 36 für Lithiumionen besser ausgenutzt und es wird letztlich ein Elutionsfluid 36 mit einer hohen Lithiumionenkonzentration erhalten.

## Patentansprüche

1. Anlage (10) zur Gewinnung von Lithium aus Lithium-haltigen Fluiden, wenigstens umfassend:
einen ersten Behälter (12), insbesondere erste Kolonne (12), der ein erstes Sorbens (14) enthält, das dazu ausgebildet ist, Lithiumionen durch Adsorption zu binden, und
einen zweiten Behälter (16), insbesondere zweite Kolonne (16), der ein zweites Sorbens (18) enthält, das dazu ausgebildet ist, Lithiumionen durch Austausch von gebundenen Wasserstoffionen gegen Lithiumionen zu binden, und wobei
ein Fluidauslass des ersten Behälters (12) mit einem Fluideinlass des zweiten Behälters (16) fluidisch verbunden ist.

2. Anlage (10) nach Anspruch 1, **dadurch gekennzeichnet, dass** das erste Sorbens (14) ein Aluminiumoxid-basiertes Sorbens ist.

3. Anlage (10) nach einem der vorherigen Ansprüche,
**dadurch gekennzeichnet, dass** das zweite Sorbens (18) ein Manganoxid-basiertes Sorbens oder ein Titanoxid-basiertes Sorbens ist.

4. Anlage (10) nach einem der vorherigen Ansprüche,
**dadurch gekennzeichnet, dass** der Fluidauslass des ersten Behälters (12) oder ein weiterer Fluidauslass des ersten Behälters (12) mit einer Injektionsbohrung (26) fluidisch verbunden ist, sodass ein aus dem ersten Behälter (12) ausströmendes Fluid wahlweise dem zweiten Behälter (16) oder der Injektionsbohrung (26) zuführbar ist.

5. Anlage (10) nach einem der vorherigen Ansprüche,
**dadurch gekennzeichnet, dass** ein Fluidauslass des zweiten Behälters (16) mit einem Fluideinlass des ersten Behälters (12) fluidisch verbunden ist.

6. Anlage (10) nach Anspruch 5, **dadurch gekennzeichnet, dass** der Fluidauslass des zweiten Behälters (16) durch eine Entsalzungseinheit (30) mit dem Fluideinlass des ersten Behälters (12) fluidisch verbunden ist.

7. Anlage (10) nach Anspruch 6, **dadurch gekennzeichnet, dass** die Entsalzungseinheit (30) wenigstens eine Osmosemembran aufweist, und/oder dass die Entsalzungseinheit wenigstens ein Sorbens aufweist.

8. Verfahren zur Gewinnung von Lithium aus Lithium-haltigen Fluiden, insbesondere mittels einer Anlage (10) gemäß einem der Ansprüche 1 bis 7, wenigstens umfassend:
a. Hindurchleiten eines Lithium-haltigen Rohfluids (32), insbesondere Lithium-haltige Sole oder Lithium-haltige Batterie-Recycling-Lösung, durch ein erstes Sorbens (14), wobei das erste Sorbens (14) Lithiumionen durch Adsorption bindet, sodass ein mit Lithiumionen angereichertes erstes Sorbens (16) erhalten wird;
b. Hindurchleiten eines Desorptionsfluids (34) durch das mit Lithiumionen angereicherte erste Sorbens (14), wobei adsorbierte Lithiumionen desorbiert werden, sodass ein mit Lithiumionen angereichertes Desorptionsfluid (34) erhalten wird;
c. Hindurchleiten des mit Lithiumionen angereicherten Desorptionsfluids (34) durch ein zweites Sorbens (18), wobei das zweite Sorbens (18) Lithiumionen durch Austausch von gebundenen Wasserstoffionen gegen Lithiumionen bindet, sodass ein mit Lithiumionen angereichertes zweites Sorbens (18) und ein Lithiumionen-armes Desorptionsfluid (34) erhalten werden; und
d. Hindurchleiten eines säurehaltigen Elutionsfluids (36) durch das mit Lithiumionen angereicherte zweite Sorbens (18), wobei gebundene Lithiumionen durch Austausch gegen Wasserstoffionen desorbiert werden, sodass ein mit Lithiumionen angereichertes Elutionsfluid (36) erhalten wird.

9. Verfahren nach Anspruch 8, **dadurch gekennzeichnet, dass** das Lithium-haltige Rohfluid (32) unter einem Druck von zumindest 2 Bar durch das erste Sorbens (14) hindurchgeleitet wird, vorzugsweise unter einem Druck von zumindest 2 Bar und höchstens 50 Bar, vorzugsweise unter einem Druck von zumindest 5 Bar, vorzugsweise unter einem Druck von zumindest 5 Bar und höchstens 50 Bar, besonders bevorzugt unter einem Druck von zumindest 10 Bar und höchstens 30 Bar.

10. Verfahren nach einem der Ansprüche 8 und 9, **dadurch gekennzeichnet, dass** das mit Lithiumionen angereicherte Desorptionsfluid (34) unter Atmosphärendruck durch das zweite Sorbens (18) hindurchgeleitet wird.

11. Verfahren nach einem der Ansprüche 8 bis 10, **dadurch gekennzeichnet, dass** das säurehaltige Elutionsfluid (36) Salzsäure, Schwefelsäure und/oder Essigsäure aufweist.

12. Verfahren nach einem der Ansprüche 8 bis 11, **dadurch gekennzeichnet, dass** die Konzentration an Säure in dem säurehaltigen Elutionsfluid (36) zwischen 0,01 mol/l und 5 mol/l beträgt.

13. Verfahren nach einem der Ansprüche 8 bis 12, **dadurch gekennzeichnet, dass** das durch das zweite Sorbens (18) hindurchgeleitete, dann Lithiumionen-arme Desorptionsfluid (34) als Desorptionsfluid (34) wiederverwendet wird.

14. Verfahren nach einem der Ansprüche 8 bis 13, **dadurch gekennzeichnet, dass** das säurehaltige Elutionsfluid (36) mehrfach durch das zweite Sorbens (18) hindurchgeleitet wird.
